# EUROPEAN PATENT SPECIFICATION

(11) **EP 2 499 438 B1**
(45) Date of publication and mention of the grant of the patent: **02.08.2017**
(21) Application number: 10773896.5
(22) Date of filing: 27.10.2010
(51) Int. Cl.: F24H 1/43, F24H 8/00

(54) **HEAT EXCHANGER WITH IMPROVED EXHAUST GAS DISCHARGE DEVICE**
WÄRMETAUSCHER MIT VERBESSERTER ABGASABFÜHRUNGSVORRICHTUNG
ÉCHANGEUR DE CHALEUR AVEC UN DISPOSITIF DE DÉCHARGE DES GAZ D'ÉCHAPPEMENT AMÉLIORÉ

(30) Priority: 12.11.2009 IT MI20091981
(43) Date of publication of application: 19.09.2012
(73) Proprietor: Unical AG S.p.A., 46033 Castel D'ario (IT)
(72) Inventor: MORINI, Mario, I-27043 Broni (IT)
(74) Representative: Modiano, Micaela Nadia
(86) International application number: PCT/EP2010/066275
(87) International publication number: WO 2011/057894

(56) References cited:
- EP-A2- 1 936 287
- WO-A1-84/02387

## Description

### Technical field

The present invention relates to a heat exchanger with improved exhaust gas discharge device.

### Background art

In the field of heat exchangers and the like, for boilers to be used for heating sanitary water or water for central heating systems, the use is known of heat exchangers that are constituted, generally, by a metal container body inside which a combustion chamber is provided, which accommodates a coiled duct inside which the fluid to be heated circulates.

Usually, the combustible mixture, which is typically constituted by air and gas, is sent forcibly into the burner under the thrust of a fan and, after the combustion that takes place in the appropriate chamber, as a result of the thrust from the fan, the burned gases strike the coiled duct, thus achieving the desired exchange of heat.

Such known types of heat exchangers are not devoid of drawbacks, among which the fact that, once the heat exchange has occurred, the burned gases are collected in an appropriate exhaust gas hood provided outside the container body and are discharged by way of a tube, also outside the container body, thus involving considerable encumbrances.

WO 84/02387 A1 discloses a heat exchanger according to the preamble of claim 1. Moreover, the document discloses a combustion product condensing water heater including a perforated burner cylinder, fed with combustion air and natural gas, and arranged in a combustion chamber provided with an integrally finned copper tube coil for performing the heat exchange. Exhaust gases are sent downwardly from the combustion chamber, after heat exchange with the tube coil, to encounter an economizer coil, and then upwardly in a first annulus and then back down through a second annulus. The annuli are separated by a cylinder. At the bottom of the second annulus, a reservoir collects any condensed liquid, and discharge of the exhaust gases occurs outside the heater casing at the flue gas outlet by means of a blower.

EP 1 936 286 A2 discloses a combustion unit with a primary heat generator with a cylindrical burner, and a secondary heat generator with a flue gas pipe arranged coaxially into the cylindrical burner of the primary heat generator, for cooling the flue gases of the secondary heat generator in the primary heat generator.

### Disclosure of the invention

The aim of the present invention is to provide a heat exchanger with improved exhaust gas discharge device in order to limit the general encumbrances thereof.

Within this aim, an object of the present invention consists of providing a heat exchanger that is structurally simple, easy to make and assemble, and at low cost.

In accordance with the invention, there is provided a heat exchanger with improved exhaust gas discharge device, as defined in the appended claims.

### Brief description of the drawings

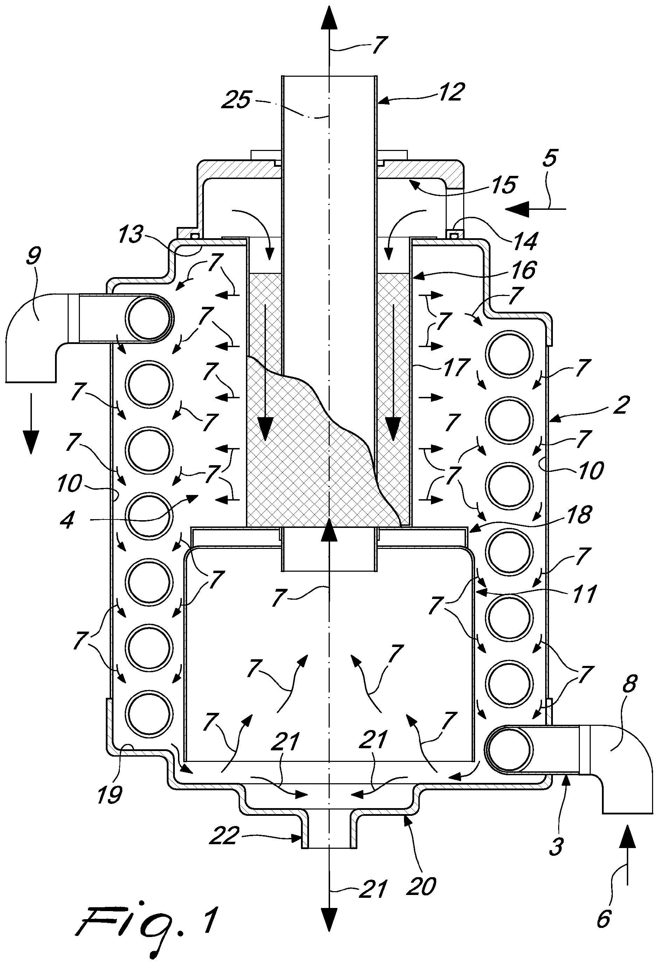

Further advantages of the present invention will become better apparent from the description of a preferred, but not exclusive, embodiment of a heat exchanger with improved exhaust gas discharge device, according to the invention, illustrated by way of nonlimiting example in the accompanying drawing which shows a longitudinal sectional view of the heat exchanger with improved exhaust gas discharge device, according to the invention.

### Ways of carrying out the invention

With reference to the figure, the heat exchanger with improved exhaust gas discharge device, generally indicated with the reference numeral 1, comprises a container body 2, cylindrical with a circular end face, inside which is accommodated one or more coiled ducts 3 which externally delimit a chamber 4 for the combustion of a combustible mixture 5 for heating the fluid or fluids to be heated 6, which circulate in the coiled ducts 3, with the burned gases 7 produced by the combustion of the combustible mixture 5 by means of a burner cylinder 16 with a perforated surface 17.

More precisely, in the embodiment shown, only one coiled duct 3 is provided, which runs from an inlet mouth 8 to an outlet mouth 9, both outside the container body 2 and positioned, respectively, in the lower portion and in the upper portion of the container body 2.

The coiled duct 3, inside which flows the fluid to be heated 6, which can be for example water intended for the sanitary plumbing system of a building or for the central heating system of the same building, is located in proximity to the outer walls 10 of the container body 2, substantially along all of its axial length.

According to the invention, at least one element 11 is provided for conveying the burned gases 7 in order to direct them into a discharge tube 12 which is accommodated within the container body 2 and the combustion chamber 4 and coaxial to the burner cylinder 16.

At the upper face 13 of the container body 2, an air intake 14 is provided for forcibly injecting the combustible mixture 5, which can be for example a mixture of air and gas, by way of external fan means which consist, for example, in a fan outside the container body 2 which is not shown.

The combustible mixture 5 is then sent into an intake chamber 15 which is annular in shape, is also defined at the upper face 13, is connected with the burner cylinder 16 and has a central hole adapted to the transit of the discharge tube 12 in order to discharge the burned gases 7 above the heat exchanger 1.

In more detail, the intake chamber 15 is connected directly with the burner cylinder 16 which is defined by a surface 17 that is permeable to the combustible mixture 5 and is cylindrical with a circular end face where the flame burns.

The permeable surface 17 is fitted coaxially onto the discharge tube 12 and is interposed between the discharge tube 12 and the coiled duct 3.

The region delimited internally by the discharge tube 12 and externally by the burner cylinder 16, besides being connected at one end with the intake chamber 15 to introduce the combustible mixture 5 into the combustion chamber 4, has the opposite end closed by a thermally insulating disk 18.

Advantageously, the conveyance element 11 can comprise a cylindrical hollow body with a circular end face, which is delimited in an upper region by the thermally insulating disk 18 and is connected, in proximity to the thermally insulating disk 18, with the discharge tube 12.

Conveniently, the conveyance element 11 is accommodated in the container body 2 on the opposite side with respect to the burner cylinder 16 coaxially to the discharge tube 12 and has a lower opening which faces the lower end face 19 of the container body 2 for the transit of the burned gases 7 from the combustion chamber 4 to the discharge tube 12.

Moreover, at the lower end face 19 of the container body 2, a tank 20 is provided for collecting the liquids 21 produced by the condensation of the burned gases 7 in contact with the coiled duct 3.

The collection tank 20 has an outward discharge connector 22 for the outflow of the liquids 21 from the container body 2.

Operation of the heat exchanger 1, according to the present invention, is as follows.

In particular, it is necessary to emphasise that the heat exchange between the fluid to be heated 6 and the burned gases 7 occurs in countercurrent.

In fact, the combustible mixture 5, under the thrust of the fan means, is sent into the intake chamber 15 through the air intake 14 to then descend in the direction of the axis, i.e. parallel to the axis 25 of the heat exchanger 1, in the burner cylinder 16.

The combustion occurs through the permeable surface 17 of the burner cylinder 16 and the burned gases 7 are directed into the combustion chamber 4.

Due to the thrust generated by the fan means, the burned gases 7 are pushed towards the coiled duct 3, striking its outer surface and yielding heat to it.

The burned gases 7, again due to the thrust generated by the fan means, are pushed further downwards, and are then conveyed by the conveyance element 11 towards the lower end face 19 of the container body 2.

The burned gases 7 move inside the conveyance element 11 by way of its lower opening, and then flow outside by way of the discharge tube 12.

As mentioned above, any condensation 21 is collected on the bottom of the container body 2 in the collection tank 20 and is then discharged by way of the connector 22.

In practice it has been found that the heat exchanger with improved exhaust gas discharge device, according to the present invention, fully achieves the intended aim and object in that having the discharge tube accommodated inside the container body results in greatly reduced dimensions with respect to heat exchangers of the same performance level that belong to the known art.

A further advantage of the heat exchanger with improved exhaust gas discharge device, according to the present invention, consists in that it is structurally simple, easy to make and at low cost.

Moreover, the heat exchanger, according to the present invention, can be positioned either vertically or horizontally by suitably adapting the attachments and outlets.

The heat exchanger with improved exhaust gas discharge device, thus conceived, is susceptible of numerous modifications and variations, all of which are within the scope of the appended claims.

In practice the materials employed, provided they are compatible with the specific use, and the dimensions and the contingent shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A heat exchanger (1) with improved exhaust gas discharge device, comprising a container body (2) which accommodates internally at least one coiled duct (3), which is adapted to produce the flow inside it of at least one fluid to be heated (6) and delimits externally a combustion chamber (4) of a combustible mixture (5) that is burned in a burner cylinder (16) in order to heat said at least one fluid to be heated (6) with the burned gases (7) produced by the combustion of said combustible mixture (5), the heat exchanger (1) further comprising at least one conveyance element (11) arranged for conveying said burned gases (7) produced by the combustion of said combustible mixture (5) in order to direct said burned gases (7) into a discharge tube (12), said discharge tube (12) being open at the top for discharging said burned gases (7) above the heat exchanger (1), the conveyance element (11) being arranged such that the burned gases can move inside the conveyance element by way of its lower opening, and can then flow outside by way of the discharge tube (12), **characterized in that**
said discharge tube (12) is accommodated within said container body (2) and said combustion chamber (4) and coaxial to and within said burner cylinder (16).

2. The heat exchanger (1) according to claim 1, **characterized in that** it comprises, at the upper end face (13) of said container body (2), an air intake (14) for the forced injection of said combustible mixture (5) by way of fan means which are external to said container body (2) in an intake chamber (15), which is connected to said combustion chamber (4), said intake chamber (15) being annular for the passage of said discharge tube (12) in its centre.

3. The heat exchanger (1) according to one or more of the preceding claims, **characterized in that** said burner cylinder (16) comprises a surface (17) that is permeable to said combustible mixture (5) and is cylindrical with a circular end face and is fitted coaxially onto said discharge tube (12), the region delimited internally by said discharge tube (12) and externally by said burner cylinder (16) being connected at one end to said intake chamber (15) to introduce said combustible mixture (5) into said combustion chamber (4) and having the opposite end closed by a thermally insulating disk (18), said perforated surface (17) being interposed between said discharge tube (12) and said at least one coiled duct (3).

4. The heat exchanger (1) according to one or more of the preceding claims, **characterized in that** said conveyance element (11) comprises a cylindrical hollow body with a circular end face, which is delimited in an upper region by said thermally insulating disk (18) and is connected, proximate to said thermally insulating disk (18), to said discharge tube (12), said conveyance element (11) being accommodated in said container body (2) on the opposite side with respect to said burner cylinder (16) coaxially to said discharge tube (12) and having a lower opening which faces a lower end face (19) of said container body (2) for the passage of said burned gases (7) from said combustion chamber (4) to said discharge tube (12).

5. The heat exchanger (1) according to claim 4, **characterized in that** it comprises, at said lower end face (19) of said container body (2), a tank (20) for collecting the liquids (21) produced by the condensation of said burned gases (7) in contact with said at least one coiled duct (3), said collection tank (20) having an outward discharge connector (22) for the outflow of said liquids (21) from said container body (2).

## Patentansprüche

1. Wärmetauscher (1) mit verbesserter Abgasabführungsvorrichtung, der einen Behälterkörper (2) umfasst, der in seinem Inneren mindestens eine Rohrschlange (3) enthält, welche ausgebildet ist, um in ihrem Inneren die Strömung mindestens eines zu erhitzenden Fluids (6) zu verursachen, und außen einen Brennraum (4) für eine brennbare Mischung (5) begrenzt, die in einem Brennzylinder (16) verbrannt wird, um das mindestens eine zu erhitzende Fluid (6) mit den verbrannten Gasen (7) zu erhitzen, die durch die Verbrennung der brennbaren Mischung (5) erzeugt werden, wobei der Wärmetauscher (1) weiter mindestens ein Überführungselement (11) umfasst, das ausgebildet ist, um die verbrannten Gase (7), die durch die Verbrennung der brennbaren Mischung (5) erzeugt werden, zu überführen, um die verbrannten Gase (7) in ein Ablassrohr (12) zu lenken,
wobei das Ablassrohr (12) zum Ablassen der verbrannten Gase (7) oberhalb des Wärmetauschers (1) oben offen ist, das Überführungselement (11) so angeordnet ist, dass die verbrannten Gase sich innerhalb des Uberführungselements über seine untere Öffnung bewegen und dann durch das Ablassrohr (12) nach außen strömen können, **dadurch gekennzeichnet, dass** das Ablassrohr (12) in dem Behälterkörper (2) und dem Brennraum (4) untergebracht ist und koaxial mit dem Brennzylinder (16) ist und in ihm liegt.

2. Wärmetauscher (1) gemäß Anspruch 1, **dadurch gekennzeichnet, dass** er an der oberen Endfläche (13) des Behälterkörpers (2) einen Lufteinlass (14) für das erzwungene Einspritzen der brennbaren Mischung (5) mit Hilfe von Ventilatormitteln, die außerhalb des Behälterkörpers (2) liegen, in eine Einlasskammer (15) umfasst, die mit dem Brennraum (4) verbunden ist, wobei die Einlasskammer (15) zum Hindurchführen des Ablassrohrs (12) in ihrer Mitte ringförmig ist.

3. Der Wärmetauscher (1) gemäß einem oder mehreren der obigen Ansprüche, **dadurch gekennzeichnet, dass** der Brennzylinder (16) eine Oberfläche (17) umfasst, die durchlässig für die brennbare Mischung (5) und zylindrisch mit einer kreisförmigen Endfläche und koaxial auf das Ablassrohr (12) aufgesetzt ist, wobei der Bereich, der innen von dem Ablassrohr (12) und außen von dem Brennzylinder (16) begrenzt ist, an einem Ende mit der Einlasskammer (15) verbunden ist, zum Einlassen der brennbaren Mischung (5) in den Brennraum (4), und wobei das gegenüberliegende Ende von einer wärmeisolierenden Scheibe (18) verschlossen ist, wobei die perforierte Oberfläche (17) zwischen dem Ablassrohr (12) und der mindestens einen Rohrschlange (3) angeordnet ist.

4. Wärmetauscher (1) gemäß einem oder mehreren der obigen Ansprüche, **dadurch gekennzeichnet, dass** das Überführungselement (11) einen zylindrischen Hohlkörper mit einer kreisförmigen Endfläche umfasst, der in einem oberen Bereich durch die wärmeisolierende Scheibe (18) begrenzt und nahe der wärmeisolierenden Scheibe (18) mit dem Ablassrohr (12) verbunden ist, wobei das Überführungselement (11) in dem Behälterkörper (2) auf der dem Brennzylinder (16) gegenüberliegenden Seite, koaxial mit dem Ablassrohr (12), untergebracht ist und eine untere Öffnung hat, die einer unteren Endfläche (19) des Behälterkörpers (2) zugewandt ist, zum Hindurchleiten der verbrannten Gase (7) von dem Brennraum (4) zu dem Ablassrohr (12).

5. Der Wärmetauscher (1) gemäß Anspruch 4, **dadurch gekennzeichnet, dass** er an der unteren Endfläche (19) des Behälterkörpers (2) einen Tank (20) zum Sammeln der Flüssigkeiten (21) umfasst, die durch die Kondensation der verbrannten Gase (7) im Kontakt mit der mindestens einen Rohrschlange (3) erzeugt werden, wobei der Sammeltank (20) einen Ablassstutzen (22) nach außen für das Herausströmen der Flüssigkeiten (21) aus dem Behälterkörper (2) hat.

## Revendications

1. Echangeur de chaleur (1) avec un dispositif de décharge des gaz d'échappement amélioré, comprenant un corps de contenant (2) qui loge intérieurement au moins un conduit hélicoïdal (3) qui est adapté pour produire l'écoulement, à l'intérieur de ce dernier, d'au moins un fluide à chauffer (6) et délimite, extérieurement, une chambre de combustion (4) d'un mélange combustible (5) qui est brûlé dans un cylindre de brûleur (16) afin de chauffer ledit au moins un fluide à chauffer (6) avec les gaz brûlés (7) produits par la combustion dudit mélange combustible (5), l'échangeur de chaleur (1) comprenant en outre au moins un élément de transport (11) agencé pour transporter lesdits gaz brûlés (7) produits par la combustion dudit mélange combustible (5) afin de diriger lesdits gaz brûlés (7) dans un tube de décharge (12),
ledit tube de décharge (12) étant ouvert au niveau de la partie supérieure pour décharger lesdits gaz brûlés (7) au-dessus de l'échangeur de chaleur (1), l'élément de transport (11) étant agencé de sorte que les gaz brûlés peuvent se déplacer à l'intérieur de l'élément de transport au moyen de son ouverture inférieure, et peuvent ensuite s'écouler à l'extérieur au moyen du tube de décharge (12), **caractérisé en ce que** :
ledit tube de décharge (12) est logé à l'intérieur dudit corps de contenant (2) et de ladite chambre de combustion (4) et étant coaxial à et à l'intérieur dudit cylindre de brûleur (16).

2. Echangeur de chaleur (1) selon la revendication 1, **caractérisé en ce qu'**il comprend, au niveau de la face d'extrémité supérieure (13) dudit corps de contenant (2), une admission d'air (14) pour l'injection forcée dudit mélange combustible (5) au moyen de moyens de ventilateur qui sont à l'extérieur par rapport audit corps de contenant (2) dans une chambre d'admission (15) qui est raccordée à ladite chambre de combustion (4), ladite chambre d'admission (15) étant annulaire pour le passage dudit tube de décharge (12) en son centre.

3. Echangeur de chaleur (1) selon une ou plusieurs des revendications précédentes, **caractérisé en ce que** ledit cylindre de brûleur (16) comprend une surface (17) qui est perméable audit mélange combustible (5) et est cylindrique avec une face d'extrémité circulaire et est montée de manière coaxiale sur ledit tube de décharge (12), la région étant délimitée intérieurement par ledit tube de décharge (12) et extérieurement par ledit cylindre de brûleur (16) qui est raccordé, au niveau d'une extrémité, à ladite chambre d'admission (15) pour introduire ledit mélange de combustible (5) dans ladite chambre de combustion (4) et ayant l'extrémité opposée fermée par un disque thermiquement isolant (18), ladite surface perforée (17) étant intercalée entre ledit tube de décharge (12) et ledit au moins un conduit hélicoïdal (3).

4. Echangeur de chaleur (1) selon une ou plusieurs des revendications précédentes, **caractérisé en ce que** ledit élément de transport (11) comprend un corps creux cylindrique avec une face d'extrémité circulaire, qui est délimitée, dans une région supérieure, par ledit disque thermiquement isolant (18) et est raccordée, à proximité dudit disque thermiquement isolant (18), audit tube de décharge (12), ledit élément de transport (11) étant logé dans ledit corps de contenant (2) sur le côté opposé par rapport audit cylindre de brûleur (16) de manière coaxiale par rapport audit tube de décharge (12) et ayant une ouverture inférieure qui fait face à une face d'extrémité inférieure (19) dudit corps de contenant (2) pour le passage desdits gaz brûlés (7) de ladite chambre de combustion (4) audit tube de décharge (12),

5. Echangeur de chaleur (1) selon la revendication 4, **caractérisé en ce qu'**il comprend, au niveau de ladite face d'extrémité inférieure (19) dudit corps de contenant (2), un réservoir (20) pour collecter les liquides (21) produits par la condensation desdits gaz brûlés (7) en contact avec ledit au moins un conduit hélicoïdal (3), ledit réservoir de collecte (20) ayant un connecteur de décharge vers l'extérieur (22) pour la sortie desdits liquides (21) dudit corps de contenant (2).
